# EUROPEAN PATENT APPLICATION

(11) **EP 4 468 424 A1**
(43) Date of publication of application: **27.11.2024**
(21) Application number: 24170940.1
(22) Date of filing: 18.04.2024
(51) Int. Cl.: H01M 4/88, H01M 4/92

(54) **METHOD FOR PREPARING FUEL CELL CATALYST ELECTRODE AND FUEL CELL CATALYST ELECTRODE PREPARED THEREFROM**

(30) Priority: 26.05.2023 KR 20230068135
(71) Applicant: Hyundai Motor Company, Seoul (KR); Kia Corporation, Seoul (KR)
(72) Inventor: LEE, Ji Eun, 16891 Yongin-si, Gyeonggi-do (KR); LEE, Sung Chul, 16891 Yongin-si, Gyeonggi-do (KR); KIM, Dong Jin, 16891 Yongin-si, Gyeonggi-do (KR); CHO, Young Ick, 16891 Yongin-si, Gyeonggi-do (KR); CHO, Min Ju, 16891 Yongin-si, Gyeonggi-do (KR); CHO, Sung Yong, 16891 Yongin-si, Gyeonggi-do (KR)
(74) Representative: Viering, Jentschura & Partner mbB Patent- und Rechtsanwälte

(57) **Abstract**

The present invention relates to a method for preparing a fuel cell catalyst electrode, which includes dispersing and mixing a first catalyst, a binder, and a first solvent to prepare a first catalyst slurry (S10), heat-treating and pulverizing the first catalyst slurry to prepare a first catalyst powder (S20), dispersing and mixing a second catalyst, a binder, and a second solvent to prepare a second catalyst slurry (S30), heat-treating and pulverizing the second catalyst slurry to prepare a second catalyst powder (S40), dispersing the first catalyst powder and the second catalyst powder in a third solvent to prepare a third catalyst slurry (S50), and applying or transferring the third catalyst slurry onto a substrate to prepare an electrode having a catalyst layer formed therein (S60).

## Description

### CROSS-REFERENCE TO RELATED APPLICATIONS

This application claims the priority of Korean Patent Application No. 10-2023-0068135 filed on May 26, 2023, in the Korean Intellectual Property Office, the disclosure of which is incorporated herein by reference.

### BACKGROUND OF THE INVENTION

### Field of the Invention

The present invention relates to a method for preparing a fuel cell catalyst electrode, and more particularly, to a method for preparing a fuel cell catalyst electrode as a fuel cell catalyst electrode having improved output characteristics.

### Description of the Related Art

Fuel cells serve to electrochemically oxidize fuels, such as hydrogen and methanol, in cells to convert chemical energy of the fuels into electrical energy. In particular, a polymer electrolyte membrane fuel cell (PEFC) uses a solid polymer electrolyte membrane having ion conductivity to enable low-temperature operation compared to high-temperature operation fuel cells such as a solid oxide fuel cell (SOFC) and make a simple system applicable, so that the PEFC is used as a power source for vehicles, buildings, and the like.

The polymer electrolyte membrane fuel cell includes a membrane electrode assembly (MEA) including a negative electrode (a hydrogen electrode), a positive electrode (an air electrode), and a hydrogen ion conductive polymer electrolyte membrane. In this case, the negative electrode (the hydrogen electrode) and the positive electrode (the air electrode)are each present in the form in which homogeneous or heterogeneous noble metal catalysts capable of causing an oxidation reaction of fuel and a reduction reaction of oxygen are evenly dispersed on a surface of a porous carrier. Catalysts show differences in charge transfer resistance and the like by type, and also show differences in water discharge characteristics and the like due to physical properties such as hydrophobicity and specific surface area derived from the surface shape of catalysts. Similarly, a porous support element used in the preparation of a supported catalyst also has different surface properties and affinity with an ionomer depending on a surface area thereof and crystallinity.

Therefore, when designing an electrode layer of the membrane electrode assembly (MEA), it is required to review the selection of a catalyst, the selection of a support element when the catalyst is used as a supported catalyst, and the selection of a binder, and consider the affinity between materials according to the type of catalyst and the type of binder included in an electrode, and then lastly review output characteristics of a fuel cell exhibited therefrom.

Based on this understanding, the inventors of the present invention apply two types of catalysts to fuel cell electrodes and place the catalysts to the electrode through a separate process instead of simply mixing and applying the two types of catalysts to improve the high output characteristics of the fuel cell electrode so as to increase the output density of a fuel cell stack, and have consequently invented a method for preparing a fuel cell catalyst electrode capable of reducing the volume of an entire fuel cell system.

### [Related Art Document]

### [PATENT DOCUMENTS]

(Patent Document 1) KR 2007-0099935 A
(Patent Document 2) KR 10-1113311 B1

### SUMMARY OF THE INVENTION

An aspect of the present invention provides a method for preparing a fuel cell catalyst electrode having excellent activity of a catalyst reaction in a fuel cell catalyst electrode, particularly in a positive electrode (air electrode), high fuel permeability, and improved water discharge characteristics, and thus exhibiting improved high output characteristics of a fuel cell electrode to allow a fuel cell stack including the fuel cell electrode to have high power density, and consequently reducing the volume of an entire fuel cell system.

To solve the tasks described above, the present invention provides a method for preparing a fuel cell catalyst electrode, which includes dispersing and mixing a first catalyst, a binder, and a first solvent to prepare a first catalyst slurry (S10), heat-treating and pulverizing the first catalyst slurry to prepare a first catalyst powder (S20), dispersing and mixing a second catalyst, a binder, and a second solvent to prepare a second catalyst slurry (S30), heat-treating and pulverizing the second catalyst slurry to prepare a second catalyst powder (S40), dispersing the first catalyst powder and the second catalyst powder in a third solvent to prepare a third catalyst slurry (S50), and applying or transferring the third catalyst slurry onto a substrate to prepare an electrode having a catalyst layer formed therein (S60), wherein in the step (S50), the first catalyst powder and the second catalyst powder are dispersed in a weight ratio of 100:5 to 100:60 in the third solvent.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 shows unit cell performance curves measured in RH50 conditions for Examples 1 to 4;
FIG. 2 shows unit cell performance curves measured in RH100 conditions for Examples 1 to 4;
FIG. 3 shows unit cell performance curves measured in RH50 conditions for Example 3 and Comparative Examples 1 to 3; and
FIG. 4 shows unit cell performance curves measured in RH100 conditions for Example 3 and Comparative Examples 1 to 3.

### DETAILED DESCRIPTION OF THE PREFERRED EMBODIMENT

Hereinafter, the present invention will be described in detail to aid in understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, numbers such as terms 'first' and 'second' are only numbers arbitrarily directed to easily distinguish components, and do not provide a special meaning to each component.

The present invention provides a method for preparing a fuel cell catalyst electrode, specifically a fuel cell catalyst electrode for preparing a fuel cell negative electrode.

According to an embodiment of the present invention, provided is a method for preparing a fuel cell catalyst electrode, which includes dispersing and mixing a first catalyst, a binder, and a first solvent to prepare a first catalyst slurry (S10), heat-treating and pulverizing the first catalyst slurry to prepare a first catalyst powder (S20), dispersing and mixing a second catalyst, a binder, and a second solvent to prepare a second catalyst slurry (S30), heat-treating and pulverizing the second catalyst slurry to prepare a second catalyst powder (S40), dispersing the first catalyst powder and the second catalyst powder in a third solvent to prepare a third catalyst slurry (S50), and applying or transferring the third catalyst slurry onto a substrate to prepare an electrode having a catalyst layer formed therein (S60), wherein in the step (S50), the first catalyst powder and the second catalyst powder are dispersed in a weight ratio of 100:5 to 100:60 in the third solvent.

### Dispersing and mixing a first catalyst, a binder, and a first solvent to prepare a first catalyst slurry (S10)

The step (S10) includes preparing a first catalyst slurry to include a first catalyst in a catalyst layer of a fuel cell catalyst electrode, particularly a positive electrode.

According to an embodiment of the present invention, the first catalyst may include a catalyst metal and a conductive material having the catalyst metal supported thereon.

According to an embodiment of the present invention, the first catalyst may include platinum or a platinum-based alloy, and the platinum-based alloy may be an alloy of platinum and at least one selected from gold, silver, copper, palladium, tin, iridium, rhodium, ruthenium, iron, cobalt, nickel, chromium, tungsten, manganese, and vanadium. Specifically, the first catalyst may include a platinum-based alloy represented by Pt-M, where Pt may be platinum and M may be at least one selected from gold, silver, copper, palladium, tin, iridium, rhodium, ruthenium, iron, cobalt, nickel, chromium, tungsten, manganese, and vanadium.

In addition, the conductive material may be activated carbon, and as a specific example, may be porous activated carbon for supporting the catalyst metal. As a more specific example, the hydrogen oxidation reaction catalyst may be a Pt-M/C catalyst in which the platinum-based alloy is supported on a porous carbon support element.

According to an embodiment of the present invention, the first catalyst may have the catalyst metal supported thereon in an amount of 10 parts by weight to 150 parts by weight, 30 parts by weight to 120 parts by weight, or 50 parts by weight to 100 parts by weight, with respect to 100 parts by weight of the conductive material, and when the above range is satisfied, the conductive material may produce sufficient electrode stability and ion conductivity and also induce the effect of improving hydrogen oxidation reaction activity.

The activated carbon may have a BET specific surface area of 400 m²/g to 1,000 m²/g, specifically 500 m²/g to 1,000 m²/g, and more specifically 600 m²/g to 900 m². In addition, the activated carbon may have a vertical (height direction) crystal size, Lc, of 1.0 nm to 3.2 nm, specifically 2.5 nm to 3.2 nm, and more specifically 3.0 nm to 3.2 nm.

In addition, according to an embodiment of the present invention, when the conductive material is activated carbon, the catalyst metal-supported activated carbon may have a BET specific surface area of 200 m²/g to 600 m²/g, specifically, a BET specific surface area of 250 m²/g to 550 m²/g, and more specifically, 50 m²/g to 150 m²/g.

According to an embodiment of the present invention, the binder may be an ion conductive polymer. As a specific example, the ion conductive polymer may be a polymer having a cation exchange group selected from the group consisting of a sulfonic acid group, a carboxylic acid group, a phosphoric acid group, a phosphonic acid group, and a derivative thereof in a side chain.

According to an embodiment of the present invention, the ion conductive polymer may be at least one ion conductive polymer selected from the group consisting of a fluorine-based polymer, a benzimidazole-based polymer, a polyimide-based polymer, a polyetherimide-based polymer, a polyphenylene sulfide-based polymer, a polysulfone-based polymer, a polyethersulfone-based polymer, a polyether ketone-based polymer, a polyether-ether ketone-based polymer, and a polyphenylquinoxalinebased polymer.

According to an embodiment of the present invention, the ion conductive polymer may be poly(perfluorosulfonic acid), poly(perfluorocarboxylic acid), or a copolymer of tetrafluoroethylene and fluorovinyl ether including a sulfonic acid group. In addition, the ion conductive polymer may be an ion conductive polymer in which a cation exchange group selected from the group consisting of a sulfonic acid group, a carboxylic acid group, a phosphoric acid group, a phosphonic acid group, and a derivative thereof is bonded to a side chain in one polymer among aryl ketone, poly(2,2'-m-phenylene)-5,5'-bibenzimidazole, and poly(2,5-benzimidazole).

According to an embodiment of the present invention, the binder may be of one type or a mixture of two or more types, and may further contain a non-conductive compound when necessary. In this case, adhesion to a polymer electrolyte membrane may be further improved. In this case, the non-conductive compound may be at least one selected from the group consisting of polytetrafluoroethylene (PTFE), a tetrafluoroethylene-hexafluoropropylene copolymer (FEP), a tetrafluoroethyleneperfluoroalkylvinylether copolymer (PFA), ethylene/tetrafluoroethylene (ETFE), an ethylene chlorotrifluoroethylene copolymer (ECTFE), polyvinylideneflu-4-oride, a copolymer (PVdF-HFP) of polyvinylidenefluoride-hexafluoropropylene, dodecylbenzenesulfonic acid, and sorbitol.

According to an embodiment of the present invention, the first solvent may be a dispersant for mixing and dispersing the first catalyst and the binder in the preparation of a first catalyst slurry. As a specific example, the first solvent may be an aqueous solvent or an organic solvent. The aqueous solvent may include water, alcohol, or a mixture thereof. The alcohol may be at least one selected from primary alcohols such as ethanol and isopropyl alcohol; and polyols such as ethylene glycol, propylene glycol, 1,3-butylene glycol, and dipropylene glycol. In addition, the organic solvent may be at least one selected from the group consisting of N-methyl-2-pyrrolidone (NMP), N,N-dimethylacetamide (DMAc), and N,N-dimethylformamide (DMF).

### Heat-treating and pulverizing the first catalyst slurry to prepare a first catalyst powder (S20)

The step (S20) includes heat-treating and pulverizing the first catalyst slurry to prepare a first catalyst powder.

In the method for preparing a fuel cell catalyst electrode of the present invention, the first catalyst powder is prepared using only the first catalyst slurry in the step (S20). In the method for preparing a fuel cell catalyst electrode of the present invention, the first catalyst powder is obtained from the first catalyst slurry in which the first catalyst is dispersed and mixed.

In the method for preparing a fuel cell catalyst electrode according to the present invention, the first catalyst powder is prepared using only the first catalyst, separately from the second catalyst, through the process of steps (S10) and (S20).

According to an embodiment of the present invention, the heat-treatment in the step (S20) may be performed at a temperature range from 100 °C to 200 °C, from 100 °C to 180 °C, or from 100 °C to 150 °C, and within the range, mechanical stability of the binder may be improved, and also changes in crystallinity and an ion channel size may be minimized, and a first catalyst in which the first solvent present in the first catalyst slurry is entirely removed may be prepared.

According to an embodiment of the present invention, the pulverization in the step (S20) may be performed using a pulverizing apparatus that is commonly used to obtain a mass of the first catalyst obtained by the heat-treatment in a powder form.

According to an embodiment of the present invention, the first catalyst powder may be formed to have the binder applied onto the first catalyst.

According to an embodiment of the present invention, the first catalyst powder prepared in the step (S20) may be present in a form in which some or all of first catalyst particles are covered with the binder and the first catalyst particles are bonded by the binder.

### Dispersing and mixing a second catalyst, a binder, and a second solvent to prepare a second catalyst slurry (S30)

The step (S30) includes dispersing and mixing a second catalyst, a binder, and a second solvent to prepare a second catalyst slurry.

According to an embodiment of the present invention, the second catalyst may include a catalyst metal and a conductive material having the catalyst metal supported thereon. The catalyst metal may be at least one selected from the group consisting of platinum, gold, silver, copper, palladium, tin, iridium, rhodium, ruthenium, iron, cobalt, nickel, chromium, tungsten, manganese, and vanadium.

In addition, according to an embodiment of the present invention, the conductive material included in the second catalyst may be a crystalline carbon support element, specifically, a highly crystalline carbon support element. Examples of the crystalline carbon support element may include carbon nanotubes (CNT) and carbon nanofibers (CNF), and among the examples of carbon nanotubes, herringbone-type carbon nanotubes may correspond to highly crystalline carbon support elements.

According to an embodiment of the present invention, the activated carbon support element may have a BET specific surface area of 100 m²/g to 500 m²/g, specifically 100 m²/g to 400 m²/g, and more specifically 100 m²/g to 300 m². In addition, the activated carbon may have a vertical (height direction) crystal size, Lc, of 3.3 nm to 4.5 nm, specifically 3.3 nm to 4.0 nm, and more specifically 3.3 nm to 3.6 nm.

In addition, according to an embodiment of the present invention, when the conductive material is a crystalline carbon support element, the catalyst metal-supported crystalline carbon support element may have a BET specific surface area of 30 m²/g to 300 m²/g, specifically, a BET specific surface area of 40 m²/g to 200 m²/g, and more specifically, 50 m²/g to 150 m²/g.

According to an embodiment of the present invention, the second catalyst may have the catalyst metal supported thereon in an amount of 10 parts by weight to 150 parts by weight, 30 parts by weight to 120 parts by weight, or 50 parts by weight to 100 parts by weight, with respect to 100 parts by weight of the conductive material, and when the above range is satisfied, the support element may produce sufficient electrode stability and ion conductivity and also induce the effect of improving catalyst reaction activity to a suitable extent.

According to an embodiment of the present invention, the binder may be an ion conductive polymer. As a specific example, the ion conductive polymer may be a polymer having a cation exchange group selected from the group consisting of a sulfonic acid group, a carboxylic acid group, a phosphoric acid group, a phosphonic acid group, and a derivative thereof in a side chain.

According to an embodiment of the present invention, the ion conductive polymer may be at least one ion conductive polymer selected from the group consisting of a fluorine-based polymer, a benzimidazole-based polymer, a polyimide-based polymer, a polyetherimide-based polymer, a polyphenylene sulfide-based polymer, a polysulfone-based polymer, a polyethersulfone-based polymer, a polyether ketone-based polymer, a polyether-ether ketone-based polymer, and a polyphenylquinoxalinebased polymer.

According to an embodiment of the present invention, the ion conductive polymer may be poly(perfluorosulfonic acid), poly(perfluorocarboxylic acid), or a copolymer of tetrafluoroethylene and fluorovinyl ether including a sulfonic acid group. In addition, the ion conductive polymer may be an ion conductive polymer in which a cation exchange group selected from the group consisting of a sulfonic acid group, a carboxylic acid group, a phosphoric acid group, a phosphonic acid group, and a derivative thereof is bonded to a side chain in one polymer among aryl ketone, poly(2,2'-m-phenylene)-5,5'-bibenzimidazole, and poly(2,5-benzimidazole).

According to an embodiment of the present invention, the binder may be of one type or a mixture of two or more types, and may further contain a non-conductive compound when necessary. In this case, adhesion to a polymer electrolyte membrane may be further improved. In this case, the non-conductive compound may be at least one selected from the group consisting of polytetrafluoroethylene (PTFE), a tetrafluoroethylene-hexafluoropropylene copolymer (FEP), a tetrafluoroethyleneperfluoroalkylvinylether copolymer (PFA), ethylene/tetrafluoroethylene (ETFE), an ethylene chlorotrifluoroethylene copolymer (ECTFE), polyvinylideneflu-4-oride, a copolymer (PVdF-HFP) of polyvinylidenefluoride-hexafluoropropylene, dodecylbenzenesulfonic acid, and sorbitol.

According to an embodiment of the present invention, the second solvent may be a dispersant for mixing and dispersing the second catalyst and the binder in the preparation of a second catalyst slurry. As a specific example, the second solvent may be an aqueous solvent or an organic solvent. The aqueous solvent may include water, alcohol, or a mixture thereof. The alcohol may be at least one selected from primary alcohols such as ethanol and isopropyl alcohol; and polyols such as ethylene glycol, propylene glycol, 1,3-butylene glycol, and dipropylene glycol. In addition, the organic solvent may be at least one selected from the group consisting of N-methyl-2-pyrrolidone (NMP), N,N-dimethylacetamide (DMAc), and N,N-dimethylformamide (DMF).

### Heat-treating and pulverizing the second catalyst slurry to prepare a second catalyst powder (S40)

The step (S40) includes heat-treating and pulverizing the second catalyst slurry to prepare a second catalyst powder.

In the method for preparing a fuel cell catalyst electrode of the present invention, the second catalyst powder is prepared using only the second catalyst slurry in the step (S40), and this may allow the second catalyst to be uniformly mixed with a binder without considering the influence of the first catalyst.

According to an embodiment of the present invention, the heat-treatment in the step (S40) may be performed at a temperature range from 100 °C to 200 °C, from 100 °C to 180 °C, or from 100 °C to 150 °C, and within the range, mechanical stability of the binder may be improved, and also changes in crystallinity and an ion channel size may be minimized, and the second catalyst powder in which the second solvent present in the second catalyst slurry is entirely removed may be prepared.

According to an embodiment of the present invention, the pulverization in the step (S40) may be performed using a pulverizing apparatus that is commonly used to obtain a mass of the second catalyst obtained by the heat-treatment in a powder form.

According to an embodiment of the present invention, the second catalyst powder may be formed to have the binder applied onto the second catalyst.

According to an embodiment of the present invention, the second catalyst powder prepared in the step (S40) may be present in a form in which some or all of second catalyst particles are covered with the binder and the second catalyst particles are bonded by the binder.

### Dispersing the first catalyst powder and the second catalyst powder in a third solvent to prepare a third catalyst slurry (S50)

The step (50) includes dispersing the first catalyst powder and the second catalyst powder in a third solvent to prepare a third catalyst slurry.

In the present invention, the third catalyst slurry prepared in step (S50) is for forming a catalyst electrode, and a fuel cell catalyst electrode in which the first catalyst powder and the second catalyst powder each prepared through the above steps are dispersed and mixed together in the third solvent, and thus both the first catalyst and the second catalyst are uniformly mixed with a binder, and both a first catalyst and a second catalyst are uniformly distributed in an electrode layer may be prepared.

Meanwhile, in the fuel cell catalyst electrode of the present invention, the first catalyst powder and the second powder are dispersed in a weight ratio of 100:5 to 100:60 in the third solvent.

In addition, the first catalyst powder and the second powder may be dispersed in a weight ratio of 100:8 to 100:50, more specifically 100:10 to 100:45, in the third solvent.

According to an embodiment of the present invention, when the first catalyst and the second catalyst are included together and the above weight ratio is satisfied, an excellent catalyst reaction and excellent water discharge characteristics may be provided, excellent performance in the current density across the ranges may be provided, and excellent output may be provided, particularly in the high current range.

According to an embodiment of the present invention, the third solvent may be a dispersant for mixing and dispersing the first catalyst powder and the second catalyst powder in the preparation of a third catalyst slurry. As a specific example, the third solvent may be the same as or different from the first and second solvents described above, and may be an aqueous solvent or an organic solvent. The aqueous solvent may include water, alcohol, or a mixture thereof. The alcohol may be at least one selected from primary alcohols such as ethanol and isopropyl alcohol; and polyols such as ethylene glycol, propylene glycol, 1,3-butylene glycol, and dipropylene glycol. In addition, the organic solvent may be at least one selected from the group consisting of N-methyl-2-pyrrolidone (NMP), N,N-dimethylacetamide (DMAc), and N,N-dimethylformamide (DMF).

According to an embodiment of the present invention, the first catalyst powder and the second catalyst powder mixed in the step (S50) may each be coated with a binder, and thus the step (S50) may be performed without adding an additional binder other than the binder mixed in the steps (S10) and (S30).

### Applying or transferring the third catalyst slurry onto a substrate to prepare an electrode having a catalyst layer formed therein (S60)

In the step (S60), the third catalyst slurry is coated or transferred onto a substrate to prepare an electrode having a catalyst layer formed therein, which is a step for obtaining a fuel cell catalyst electrode.

According to an embodiment of the present invention, the step (S60) may include a step of drying for drying the second solvent included in the third catalyst slurry or a step of heat treatment for volatilizing the second solvent.

According to an embodiment of the present invention, the substrate is a support layer for preparing a fuel cell catalyst electrode from the second catalyst slurry, and any substrate that may be used for a fuel cell catalyst electrode may be used without particular limitation. In addition, the substrate may be a polymer electrolyte membrane itself in some cases.

The present invention provides a fuel cell catalyst electrode prepared from the method for preparing a fuel cell catalyst electrode.

According to an embodiment of the present invention, the fuel cell catalyst electrode may include a substrate, and a catalyst layer formed on at least one surface of the substrate, and the catalyst layer may include a first catalyst, a second catalyst, and a binder. As such, when two types of catalysts, the first catalyst and the second catalyst, are applied to the catalyst layer, the first catalyst and the second catalyst are each coated with a binder, and then the catalyst layer is prepared using a mixed slurry, the catalyst layer may include both the first catalyst and the second catalyst having different properties, and the first catalyst and the second catalyst may be evenly distributed. Such a fuel cell catalyst electrode of the present invention may exhibit an excellent catalyst reaction, excellent output in the high current range, and excellent water discharge characteristics.

In addition, the present invention provides a membrane electrode assembly including the polymer electrolyte membrane. The membrane electrode assembly may include a negative electrode, a positive electrode, and a polymer electrolyte membrane interposed between the negative electrode and the positive electrode, and the positive electrode may be the fuel cell catalyst electrode according to the present invention.

According to an embodiment of the present invention, the membrane electrode assembly may be an assembly of an electrode in which an electrochemical catalyst reaction of fuel such as hydrogen gas and air containing oxygen takes place and a polymer electrolyte membrane in which hydrogen ion transfer takes place, and may be in the form that the negative electrode, the positive electrode, and the polymer electrolyte membrane interposed between the negative electrode and the positive electrode adhere to one another.

According to an embodiment of the present invention, the membrane electrode assembly may have a gas diffusion layer introduced onto one surface of each of the negative electrode (the fuel electrode or the hydrogen electrode) supplying a reaction gas and the positive electrode (the oxygen electrode or the air electrode). As a specific example, the membrane electrode assembly may be interposed between the gas diffusion layers introduced onto one surface of each of the negative electrode and the positive electrode.

According to an embodiment of the present invention, the membrane electrode assembly may have the catalyst layer introduced onto the other surface of each of the negative electrode (the fuel electrode or the hydrogen electrode) supplying the reaction gas and the positive electrode (the oxygen electrode or the air electrode). As a specific example, the polymer electrolyte membrane may be interposed between the catalyst layers introduced onto one surface of each of the negative electrode and the positive electrode.

According to an embodiment of the present invention, the membrane electrode assembly may be a stacked structure having one type of stack configuration selected from the group consisting of the negative electrode/the polymer electrolyte membrane/the positive electrode, the gas diffusion layer/the negative electrode/the polymer electrolyte membrane/the positive electrode, the negative electrode/the polymer electrolyte membrane/the positive electrode/the gas diffusion layer, the gas diffusion layer/the negative electrode/the polymer electrolyte membrane/the positive electrode/the gas diffusion layer, the negative electrode/the catalyst layer/the polymer electrolyte membrane/the positive electrode, the negative electrode/the polymer electrolyte membrane/the catalyst layer/the positive electrode, the negative electrode/the catalyst layer/the polymer electrolyte membrane/the catalyst layer/the positive electrode, the gas diffusion layer/the catalyst layer/the negative electrode/the polymer electrolyte membrane/the positive electrode, the gas diffusion layer/the negative electrode/the polymer electrolyte membrane/the catalyst layer/the positive electrode, the gas diffusion layer/the catalyst layer/the negative electrode/the polymer electrolyte membrane/the catalyst layer/the positive electrode, the negative electrode/the polymer electrolyte membrane/the catalyst layer/the positive electrode/the gas diffusion layer, the negative electrode/the catalyst layer/the polymer electrolyte membrane/the positive electrode/the gas diffusion layer, the negative electrode/the catalyst layer/the polymer electrolyte membrane/the catalyst layer/positive electrode/the gas diffusion layer, and the gas diffusion layer/the catalyst layer/the negative electrode/the polymer electrolyte membrane/the catalyst layer/the positive electrode/the gas diffusion layer.

According to an embodiment of the present invention, the negative electrode may be the fuel cell catalyst electrode described above, and accordingly, the catalyst layer may be the catalyst layer of the fuel cell catalyst electrode described above.

According to an embodiment of the present invention, the catalyst layer of the positive electrode may include a catalyst metal and a conductive material having the catalyst metal supported thereon. The catalyst of the positive electrode may include a metal that promotes a reduction reaction of oxygen, and may be, as a specific example, platinum, gold, silver, palladium, iridium, rhodium, ruthenium, iron, cobalt, nickel, chromium, tungsten, manganese, vanadium, and an alloy thereof. In addition, the conductive material may be activated carbon. In addition, the catalyst layer of the positive electrode may include the same ion conductive polymer as the binder of the fuel cell catalyst electrode as the binder.

According to an embodiment of the present invention, the polymer electrolyte membrane may be the ion conductive polymer, and may be the same ion conductive polymer as the binder of the fuel cell catalyst electrode described above. As another example, the ion conductive polymer may be an ion conductive polymer containing a sulfonic acid group.

According to an embodiment of the present invention, the ion conductive polymer containing the sulfonic acid group may be in the form that at least one selected from the group consisting of a fluorine-based polymer, a hydrocarbon-based polymer, and a partially fluorine-based polymer is sulfonated, and in this case, hydrogen ion conductivity and reaction gas barrier properties are excellent.

According to an embodiment of the present invention, the sulfonated fluorine-based polymer may be at least one selected from the group consisting of poly(perfluorosulfonic acid), poly(perfluorocarboxylic acid), and a copolymer of tetrafluoroethylene and fluorovinyl ether containing the sulfonic acid group.

According to an embodiment of the present invention, the sulfonated hydrocarbon-based polymer may be at least one selected from the group consisting of sulfonated polyimide, sulfonated polyaryl ether sulfone, sulfonated polyether ether ketone, sulfonated polybenzimidazole, sulfonated polysulfone, sulfonated polystyrene, sulfonated polyphosphazene, sulfonated polyetherethersulfone, sulfonated polyethersulfone, sulfonated polyetherbenzimidazole, sulfonated polyarylene ether ketone, sulfonated polyether ketone, sulfonated polystyrene, sulfonated polyimidazole, sulfonated polyetherketoneketone, and sulfonated polyaryletherbenzimidazole.

According to an embodiment of the present invention, the sulfonated partially fluorine-based polymer may be at least one selected from the group consisting of sulfonated poly(aryleneethersulfone-co-vinylidenefluoride), sulfonated trifluorostyrene-graft-poly(tetrafluoroethylene), and styrene-grafted sulfonated polyvinylidene fluoride.

According to an embodiment of the present invention, the membrane electrode assembly may be prepared through compression such as thermocompression, in a state in which the negative electrode, the positive electrode, and the polymer electrolyte membrane interposed between the negative electrode and the positive electrode are in close contact with one another. In addition, the membrane electrode assembly may be prepared by directly applying and drying a catalyst layer slurry for forming the catalyst layers of the negative electrode and the positive electrode on one surface or both surfaces of the polymer electrolyte membrane.

According to an embodiment of the present invention, the gas diffusion layer may have a double-layer structure of a micro-porous layer (MPL) and a macro-porous substrate. The micro-porous layer may be prepared by mixing carbon powder, such as acetylene black carbon and black pearls carbon, with a polytetrafluoroethylene (PTFE)-based hydrophobic agent, and then, may be applied onto one surface or both surfaces of the macro-porous substrate depending on the usage. The macro-porous substrate may be composed of carbon fiber and a polytetrafluoroethylene-based hydrophobic agent. As a specific example, carbon fibers such as carbon fiber cloth, carbon fiber felt, and carbon fiber paper may be used.

In addition, the present invention provides a fuel cell including the membrane electrode assembly. The fuel cell may include a stack, a fuel supply portion, and an oxidant supply portion.

According to an embodiment of the present invention, the stack may include one or at least two membrane electrode assemblies, and when the at least two membrane electrode assemblies are included, a bipolar plate interposed therebetween may be included. The bipolar plate delivers a fuel and an oxidizer supplied from the outside to the membrane electrode assemblies, and at the same time, serves as a conductor that connects the negative electrode and the positive electrode in series.

According to an embodiment of the present invention, the fuel supply portion may supply the fuel to the stack, and may include a fuel tank for storing the fuel and a pump for supplying the fuel stored in the fuel tank to the stack. As the fuel, a gas or liquid hydrogen or hydrocarbon fuel may be used, and examples of the hydrocarbon fuel may include alcohol such as methanol, ethanol, propanol, and butanol, or natural gas.

According to an embodiment of the present invention, the oxidizing agent supply portion may supply an oxidizing agent to the stack. As the oxidizing agent, the air may be typically used, and oxygen or air may be used by being injected via the pump.

According to an embodiment of the present invention, the fuel cell may be a polymer electrolyte membrane fuel cell, a direct liquid fuel cell, a direct methanol fuel cell, a direct formic acid fuel cell, a direct ethanol fuel cell, a direct dimethyl ether fuel cell, or the like.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Example

13.6 parts by weight of a PtCo alloy catalyst (weight ratio of Pt:Co: 8:1) and 4.1 parts by weight of an ionomer as a binder were added to 100 parts by weight of a solvent in which dipropylene glycol and water were mixed in a weight ratio of 8:2, and the mixture was evenly dispersed and mixed to prepare a first catalyst slurry. Thereafter, the first catalyst slurry was dried and pulverized to obtain a first catalyst powder.

Then, 13.6 parts by weight of the Pt-supported catalyst prepared above and 4.1 parts by weight of an ionomer as a binder were added to 100 parts by weight of a solvent in which dipropylene glycol and water were mixed in a weight ratio of 8: 2, and the mixture was evenly dispersed and mixed to prepare a second catalyst slurry. Thereafter, the second catalyst slurry was dried and pulverized to obtain a second catalyst powder.

Then, 18.0 parts by weight of the obtained first catalyst powder and 2.0 parts by weight of the second catalyst powder were added to 100 parts by weight of a solvent in which dipropylene glycol and water were mixed in a weight ratio of 8:2, and the mixture was evenly dispersed and mixed to prepare a third catalyst slurry. The prepared third catalyst slurry was applied onto a fluorinated polyimide (FPI) film at 0.3 mg/cm² and dried to prepare a fuel cell catalyst electrode.

### Example 2

A fuel cell catalyst electrode was prepared in the same manner as in Example 1, except that 17.0 parts by weight of the first catalyst powder and 3.0 parts by weight of the second catalyst powder were each added in the preparation of a third catalyst slurry.

### Example 3

A fuel cell catalyst electrode was prepared in the same manner as in Example 1, except that 16.0 parts by weight of the first catalyst powder and 4.0 parts by weight of the second catalyst powder were each added in the preparation of a third catalyst slurry.

### Example 4

A fuel cell catalyst electrode was prepared in the same manner as in Example 1, except that 14.0 parts by weight of the first catalyst powder and 6.0 parts by weight of the second catalyst powder were each added in the preparation of a third catalyst slurry.

### Comparative Example 1

13.6 parts by weight of a PtCo alloy catalyst (weight ratio of Pt:Co: 8:1) and 4.1 parts by weight of an ionomer as a binder were added to 100 parts by weight of a solvent in which dipropylene glycol and water were mixed in a weight ratio of 8:2, and the mixture was evenly dispersed and mixed to prepare a catalyst slurry. The prepared catalyst slurry was applied onto a fluorinated polyimide (FPI) film at 0.3 mg/cm² and dried to prepare a fuel cell catalyst electrode.

### Comparative Example 2

A fuel cell catalyst electrode was prepared in the same manner as in Comparative Example 1, except that the Pt-supported catalyst prepared in the process of Example 1 was used instead of a PtCo alloy catalyst.

### Comparative Example 3

13.6 parts by weight of a mixed catalyst containing a PtCo alloy catalyst (PtCo weight ratio of 8:1) and the Pt-supported catalyst prepared in the process of Example 1 in a weight ratio of 90:10, and 4.1 parts by weight of an ionomer as a binder were added to 100 parts by weight of a solvent in which dipropylene glycol and water were mixed in a weight ratio of 8:2, and the mixture was evenly dispersed and mixed to prepare a catalyst slurry. The prepared catalyst slurry was applied onto a fluorinated polyimide (FPI from FM2) film at 0.3 mg/cm² and dried to prepare a fuel cell catalyst electrode.

### Experimental Example

The performance of the fuel cell catalyst electrodes prepared in Examples and Comparative Examples was measured.

### (Preparation of membrane electrode assembly)

13.6 parts by weight of a mixed catalyst containing a PtCo alloy catalyst (Pt:Co weight ratio of 6:4) and the Pt-supported catalyst prepared in the process of Example 1 in a weight ratio of 90:10, and 4.1 parts by weight of an ionomer as a binder were added to 100 parts by weight of a solvent in which dipropylene glycol and water were mixed in a weight ratio of 1:1, and the mixture was evenly dispersed and mixed to prepare a catalyst slurry.

The catalyst slurries prepared in each of Examples 1 to 4 and Comparative Examples 1 to 3 were applied at 0.5 mg/cm² and dried.

Through this method, a membrane electrode assembly (MEA) was prepared using the fuel cell catalyst electrodes prepared in each of Examples 1 to 4 and Comparative Examples 1 to 3 as a positive electrode.

### Experimental Example

The prepared membrane electrode assembly was assembled to a cell, and then a unit cell performance curve was measured. The unit cell performance was measured at normal pressure and at a cell temperature of 75 °C after flowing 150 ccm of hydrogen a negative electrode and 150 ccm of oxygen to a positive electrode.

Before driving the operation of the unit cell, humidifiers of the negative and positive electrode were regulated using a humidity sensor (viasensoe HS-1000). The temperature of fuel supply lines of the negative and positive electrode was kept to be higher than the temperature of the humidifiers to prevent vapor condensation. Fuel gas was supplied as moist hydrogen gas and moist air are supplied at a constant rate.

The unit cell performance curve was measured in RH50 and RH100 conditions.

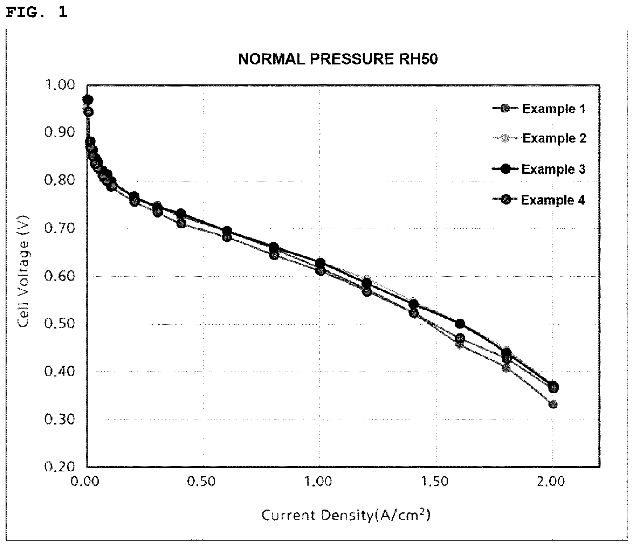

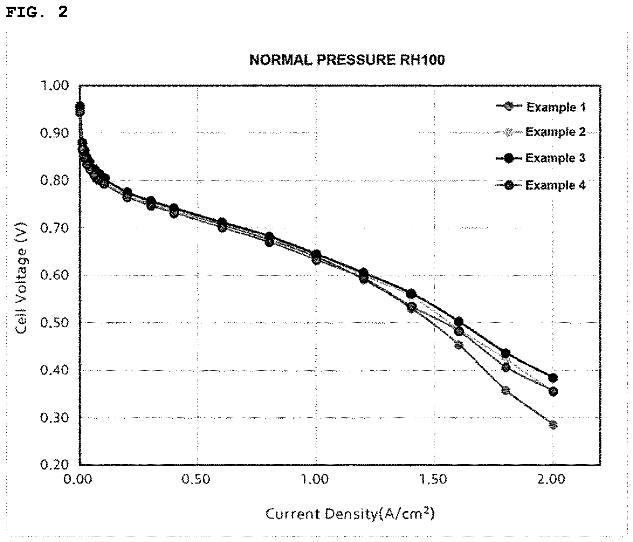

FIG. 1 shows unit cell performance curves measured in RH50 conditions for Example 3 and Comparative Examples 1 to 3, and FIG. 2 shows unit cell performance curves measured in RH100 conditions for Example 3 and Comparative Examples 1 to 3.

Referring to FIGS. 1 and 2, the fuel cell catalyst electrode of Comparative Example 1 using only a PtCo alloy catalyst showed a relatively high output at 1 A/cm² or less, but showed a relatively big decrease in performance at 1 A/cm² or greater. In addition, Comparative Example 2 using only a Pt-supported catalyst showed a relatively low output at 1A/cm² or less, but a relatively high output at 1A/cm² or greater.

In contrast, Comparative Example 3 used a PtCo alloy catalyst and a Pt-supported catalyst together, thereby preventing a relatively big decrease at 1A/cm² or greater shown in Comparative Example 1 and a relatively low output at 1A/cm² or less shown in Comparative Example 2, but failed to achieve the benefits of each catalyst due to a simple catalyst mixing and dispersion method. It was confirmed that Comparative Example 3 had a larger voltage drop according to an increase in current density than Example 4, and this was more prominent in RH100.

Referring to FIG. 1, it was confirmed that the performance curve of a membrane electrode assembly (MEA) unit cell using the fuel cell catalyst electrode of Example 3 as a positive electrode showed a gentle curve from the low current range to the high current region, and showed a relatively low voltage drop in the high current range, and in particular, the voltage drop in the high current range is lower than that of Comparative Examples 1 to 3. In contrast, Comparative Examples 1 to 3 exhibited a greater voltage drop toward the high current range. Therefore, the fuel cell catalyst electrode of Example 3 may exhibit excellent output characteristics when applied to a fuel cell requiring high output by applying a separate catalyst mixing method.

In addition, referring to FIG. 2, the performance curve of a membrane electrode assembly (MEA) unit cell using the fuel cell catalyst electrode of Example 3 as a positive electrode showed a gradual voltage drop from the low current range to the high current range compared to Comparative Examples 1 to 3 even in the RH100 conditions, and showed a low voltage drop even in the high current range.

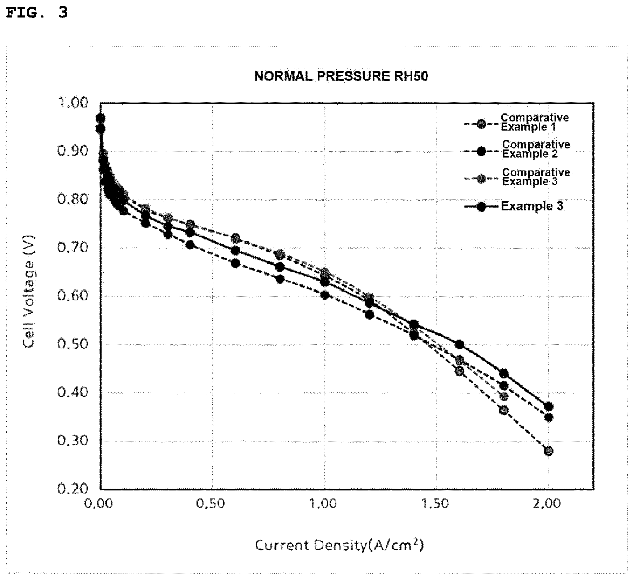

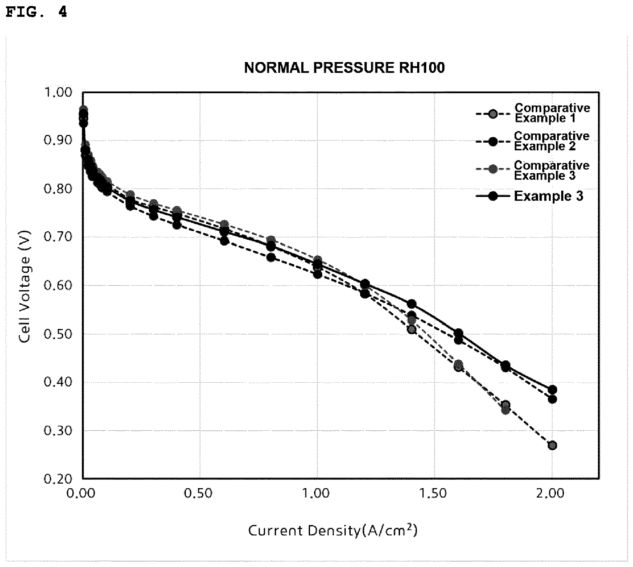

Meanwhile, FIG. 3 shows unit cell performance curves measured in RH50 conditions in Examples 1 to 4, and FIG. 4 shows unit cell performance curves measured in Examples 1 to 4 in RH100 conditions.

Referring to FIG. 3, in the RH50 conditions, Examples 1, 2, and 4 were each similar to Example 3 in voltage drop behavior according to current density, and referring to FIG. 4, even in the RH100 conditions, Examples 1, 2, and 4 were each similar to Example 3 in voltage drop behavior according to current density, and Example 1 showed a relatively large voltage drop at 1.5 A/cm² or greater, but showed the voltage drop behavior according to current density was similar to that of Example 3 up to 1.5 A/cm².

Accordingly, it was confirmed that the fuel cell catalyst electrodes of Examples 1 to 4 exhibited relatively excellent effects even at low current densities and high current densities.

A method for preparing a fuel cell catalyst electrode according to the present invention applies two types of catalysts having different merits in charge transfer resistance, water discharge characteristics, and the like, and uniformly disperses a catalyst and a binder, using a separate dispersion method, and thus generates a fuel cell catalyst electrode having reduced mass transfer resistance and charge transfer resistance in the fuel cell catalyst. A fuel cell catalyst electrode prepared through the preparation method of the present invention may exhibit excellent high output characteristics, and thus increase the output density of a fuel cell stack, and consequently reduces the volume of an entire fuel cell system.

While the present invention has been shown and described in connection with the exemplary embodiments, it will be apparent to those skilled in the art that modifications and variations can be made without departing from the spirit and scope of the invention as defined by the appended claims.

## Claims

1. A method for preparing a fuel cell catalyst electrode, the method comprising:
dispersing and mixing a first catalyst, a binder, and a first solvent to prepare a first catalyst slurry (S10);
heat-treating and pulverizing the first catalyst slurry to prepare a first catalyst powder (S20);
dispersing and mixing a second catalyst, a binder, and a second solvent to prepare a second catalyst slurry (S30);
heat-treating and pulverizing the second catalyst slurry to prepare a second catalyst powder (S40);
dispersing the first catalyst powder and the second catalyst powder in a third solvent to prepare a third catalyst slurry (S50); and
applying or transferring the third catalyst slurry onto a substrate to prepare an electrode having a catalyst layer formed therein (S60),
wherein in the step (S50), the first catalyst powder and the second catalyst powder are dispersed in a weight ratio of 100:5 to 100:60 in the third solvent.

2. The method of claim 1, wherein the first catalyst comprises platinum or a platinum-based alloy, and
the platinum-based alloy is an alloy of platinum and at least one selected from gold, silver, copper, palladium, tin, iridium, rhodium, ruthenium, iron, cobalt, nickel, chromium, tungsten, manganese, and vanadium.

3. The method of claim 1 or 2, wherein the binders of the steps (S10) and (S30) are each an ion conductive polymer.

4. The method of any one of claims 1 to 3, wherein the second catalyst comprises a supported catalyst in which a catalyst metal is supported on a support element.

5. The method of claim 4, wherein the catalyst metal supported on the supported catalyst is at least one selected from the group consisting of platinum, gold, silver, copper, palladium, tin, iridium, rhodium, ruthenium, iron, cobalt, nickel, chromium, tungsten, manganese, and vanadium.

6. The method of claim 4 or 5, wherein the support element is a highly crystalline carbon support element, and the highly crystalline carbon support element has a vertical crystal size of 2.5 to 4.5 nm and a BET specific surface area of 100 to 600 m²/g.

7. The method of any one of claims 1 to 6, wherein the first catalyst powder and the second catalyst powder are each formed to be coated with a binder.

8. The method of any one of claims 1 to 7, wherein in the step (S50), the first catalyst powder and the second catalyst powder are dispersed in a weight ratio of 100:10 to 100:45 in the third solvent.

9. A fuel cell catalyst electrode comprising:
a substrate; and
a catalyst layer formed on at least one surface of the substrate,
wherein the catalyst layer comprises a first catalyst powder and a second catalyst powder,
the first catalyst powder is formed to have a binder applied onto the first catalyst, and the second catalyst powder is formed to have a binder applied onto the second catalyst, and
the first catalyst powder and the second catalyst powder satisfy a weight ratio of 100:5 to 100:60.
